(19) Europäisches Patentamt
European Patent Office
Office européen des brevets

(11) EP 3 619 266 B1

(12) **EUROPEAN PATENT SPECIFICATION**

(45) Date of publication and mention of the grant of the patent:
**20.01.2021 Bulletin 2021/03**

(21) Application number: **18715749.0**

(22) Date of filing: **12.04.2018**

(51) Int Cl.:
***C08L 23/14*** *(2006.01)* ***C08L 23/16*** *(2006.01)*

(86) International application number:
**PCT/EP2018/059357**

(87) International publication number:
**WO 2018/202396 (08.11.2018 Gazette 2018/45)**

(54) **PROPYLENE BASED POLYMER COMPOSITION**

PROPYLENBASIERTE POLYMERZUSAMMENSETZUNG

COMPOSITION POLYMÈRE À BASE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.05.2017 EP 17169391**

(43) Date of publication of application:
**11.03.2020 Bulletin 2020/11**

(73) Proprietor: **Basell Poliolefine Italia S.r.l.**
**20121 Milano (IT)**

(72) Inventors:
- **MASSARI, Paola**
  **44122 Ferrara (IT)**
- **CAVALIERI, Claudio**
  **44122 Ferrara (IT)**
- **CIARAFONI, Marco**
  **44122 Ferrara (IT)**
- **PANTALEONI, Roberto**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A2- 0 483 675**
**WO-A1-2009/080485**
**US-A1- 2003 220 452**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 619 266 B1

## Description

FIELD OF THE INVENTION

The present disclosure relates to a composition comprising a copolymers of propylene with 1-hexene and a copolymer of propylene and ethylene particularly suited for preparing films, in particular biaxially oriented polypropylene films (BOPP) and cast films having a low seal initiation temperature (SIT) and high transparency.

BACKGROUND OF THE INVENTION

Copolymer of propylene and 1-hexene are already known in the art, for example WO 2006/002778 relates to a copolymer of propylene and 1-hexene having from 0.2 to 5 wt% of 1-hexene derived units. This copolymer have a molecular weight distribution of monomodal type and are used for pipes systems.
WO 2009/077287 relates to a a copolymer of propylene with hexene-1 containing from 5 to 9% by weight of recurring units derived from hexene-1, said copolymer having a melting temperature from 125°C to 140°C and Melt Flow Rate (ASTM D1238, 230°C/2.16 kg) from 0.1 to 3 g/10 min.
WO 2015/062787 relates to a multimodal copolymers of propylene and 1-hexene having a content of 1-hexene derived units ranging from 0.6 wt% to 3.0 wt% especially suitable for the production of industrial sheets. US 2003/0220452 relates to propylene based resin compositions for films. However none of the examples discloses a propylene 1-hexene copolymer.
The applicant found that it is possible to produce BOPP and cast films having a low value of haze and a low seal initiation temperature (SIT) by using a composition comprising a propylene 1-hexene copolymer and a propylene ethylene copolymer.

SUMMARY OF THE INVENTION

Thus the present disclosure provides a propylene polymer composition comprising:

a) from 35 wt% to 65 wt% of a propylene 1-hexene copolymer containing from 10.2 to 13% by weight, of 1-hexene derived units having a Melt Flow Rate (MFR, measured according to ASTM D 1238, 230°C/2.16 kg, i.e. at 230°C, with a load of 2.16 kg) from 3.5 to 12.0 g/10 min;
b) from 35 wt% to 65 wt% of a propylene ethylene copolymer containing from 1.5 wt% to 6.5 wt% of ethylene derived units, a having a Melt Flow Rate (MFR, measured according to ASTM D 1238, 230°C/2.16 kg, i.e. at 230°C, with a load of 2.16 kg) from 3.5 to 12.0 g/10 min;
the sum of the amount of a) and b) being 100.

DETAILED DESCRIPTION OF THE INVENTION

The present disclosure provides a propylene polymer composition comprising:

a) from 35 wt% to 65 wt%; preferably from 40 wt% to 60 wt%; more preferably from 45 wt% to 55 wt% of a propylene 1-hexene copolymer containing from 10.2 to 13.0% by weight, preferably from 11.0 to 12.5% by weight, more preferably from 11.0 to 12.0% by weight of 1-hexene derived units, having a Melt Flow Rate (MFR, measured according to ASTM D 1238, 230°C/2.16 kg, i.e. at 230°C, with a load of 2.16 kg) from 3.5 to 12.0 g/10 min; preferably from 3.8 to 7.5 g/10 min; more preferably from 4.0 to 6.0 g/10 min;
b) from 35 wt% to 65 wt% preferably from 40 wt% to 60 wt% more preferably from 45 wt% to 55 wt% of a propylene ethylene copolymer containing from 1.5 wt% to 6.5 wt%; preferably from 2.0 wt% to 6.1 wt%; more preferably from 3.5 wt% to 5.1 wt% of ethylene derived units, a having a Melt Flow Rate (MFR, measured according to ASTM D 1238, 230°C/2.16 kg, i.e. at 230°C, with a load of 2.16 kg) from 3.5 to 12.0 g/10 min; preferably from 3.8 to 7.5 g/10 min; more preferably from 4.0 to 6.0 g/10 min;
the sum of the amount of a) and b) being 100.

.
The propylene 1-hexene copolymer of the present disclosure contains only propylene and 1-hexene derived units. The propylene ethylene copolymer of the present disclosure contains only propylene and ethylene derived units.
The composition of the present disclosure is endowed with a very low HAZE and a very low seal initiating temperature (SIT) so that this material can be advantageously used for the production of film in particular cast or BOPP films.

In particular the difference between the melting point of the composition and the SIT is particularly large for the composition of the present disclosure. This effect is unexpected in view of the comparative examples. A relatively high melting point allow a better processability of the polymer when used in particular for obtaining film and at the same time a low SIT value improve the use of the film in sealing applications. Furthermore the HAZE results to be particularly low very close to the value of component b) having the lower haze with respect to component a).

Components a) and b) of the propylene polymer composition can be obtained with polymerization processes carried out in the presence of stereospecific Ziegler-Natta catalysts supported on magnesium dihalides. By properly dosing the molecular weight regulator (preferably hydrogen).

The polymerization process, which can be continuous or batch, is carried out following known techniques and operating in gas phase, or in liquid phase in the presence or not of inert diluent, or by mixed liquid-gas techniques. It is preferable to carry out the polymerization in gas phase in two reactors.

Polymerization reaction time, pressure and temperature are not critical, however it is best if the temperature is from 20 to 100°C. The pressure can be atmospheric or higher.

As previously mentioned, the regulation of the molecular weight is carried out by using known regulators, hydrogen in particular.

The said stereospecific polymerization catalysts comprise the product of the reaction between:

1) a solid component, containing a titanium compound and an electron-donor compound (internal donor) supported on magnesium dihalide (preferably chloride);
2) an aluminum alkyl compound (cocatalyst); and, optionally,
3) an electron-donor compound (external donor).

Said catalysts are preferably capable of producing homopolymers of propylene having an isotactic index higher than 90% (measured as weight amount of the fraction insoluble in xylene at room temperature).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters and succinic acid esters.

Suitable succinic acid esters are represented by the formula (I):

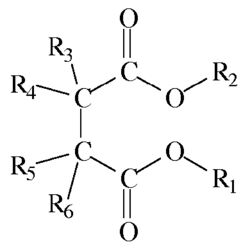

(I)

wherein the radicals $R_1$ and $R_2$, equal to or different from each other, are a C1-C20 linear or branched alkyl, alkenyl, cycloalkyl, aryl, arylalkyl or alkylaryl group, optionally containing heteroatoms; the radicals $R_3$ to $R_6$ equal to or different from each other, are hydrogen or a C1-C20 linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably C1-C8 alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Particularly suitable electron-donor compounds are 1,3-diethers of formula:

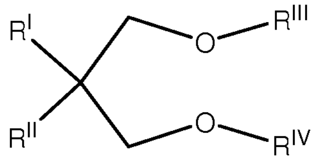

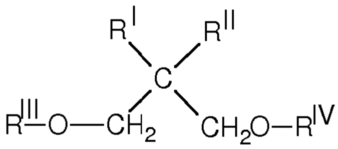

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron-donor compounds are phthalic acid esters, such as diisobutyl, dioctyl, diphenyl and benzylbutyl phthalate.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). Examples of the said silicon compounds are those of formula $R_a{}^1R_b{}^2Si(OR^3)_c$, where a and b are integer numbers from 0 to 2, c is an integer from 1 to 3 and the sum (a+b+c) is 4; $R^1$, $R^2$, and $R^3$ are alkyl, cycloalkyl or aryl radicals with 1-18 carbon atoms optionally containing heteroatoms.

Thexyltrimethoxysilane (2,3-dimethyl-2-trimethoxysilyl-butane) is particularly preferred.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

Components a) and b) prepared with the above described processes can be blended by using processes known in the art.

The composition according to the present disclosure can also be prepared by subsequential polymerization in two or more reactors wherein in the first reactor component b) is prepared and then component a) is prepared in a subsequent reactor in the presence of component b). The polymerization processes that can be used are that one above described.

The composition of the present disclosure can also contain additives commonly used for olefin polymers like, for example, nucleating and clarifying agents and processing aids.

The propylene polymer composition of the present disclosure can be advantageously used for the production of films. Preferably cast or BOPP film mono or multilayer wherein at least one layer comprises the composition of the present disclosure.

EXAMPLES

The following examples are given to illustrate the present invention without limiting purpose.

The data relating to the polymeric materials and the films of the examples are determined by way of the methods reported below.

Melting temperature (ISO 11357-3)

Determined by differential scanning calorimetry (DSC). A sample weighting 6 ± 1 mg, is heated to 200 ± 1° C at a rate of 20 °C/min and kept at 200 ± 1° C for 2 minutes in nitrogen stream and it is thereafter cooled at a rate of 20° C/min to 40 ± 2° C, thereby kept at this temperature for 2 min to crystallise the sample. Then, the sample is again fused at a temperature rise rate of 20° C/min up to 200° C ± 1. The melting scan is recorded, a thermogram is obtained (°C vs. mW), and, from this, temperatures corresponding to peaks are read. The temperature corresponding to the most intense melting peaks recorded during the second fusion is taken as the melting temperatures.

Melt Flow Rate (MFR)

Determined according to ASTM D 1238, at 230° C, with a load of 2.16 kg.

Solubility in xylene at 25°C

2.5 g of polymer and 250 ml of xylene are introduced in a glass flask equipped with a refrigerator and a magnetical stirrer. The temperature is raised in 30 minutes up to the boiling pint of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Intrinsic viscosity (IV)

Determined in tetrahydronaphthalene at 135° C.

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]'$$

The weight percentage of ethylene content was evaluated using the following equation:

$$E\%\ wt. = \frac{100 * E\%\ mol * MW_E}{E\%\ mol * MW_E + P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE+PEE}{PEP}+1\right) - \left(\frac{P}{E}+1\right)\left(\frac{EEE+PEE}{PEP}+1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm)

1-hexene and ethylene content:

Determined by $^{13}C$-NMR spectroscopy in terpolymers:
NMR analysis. $^{13}C$ NMR spectra are acquired on an AV-600 spectrometer operating at 150.91 MHz in the Fourier transform mode at 120 °C. The peak of the propylene CH was used as internal reference at 28.83. The $^{13}C$ NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program (1) | ZGPG |
| Pulse Length (P1) (2)\ | for 90° |
| Total number of points (TD) | 32K |
| Relaxation Delay (2) | 15 s |
| Number of transients (3) | 1500 |

The total amount of 1-hexene and ethylene as molar percent is calculated from diad using the following relations:

$$[P] = PP + 0.5PH + 0.5PE$$

$$[H] = HH + 0.5PH$$

$$[E] = EE + 0.5PE$$

Assignments of the $^{13}C$ NMR spectrum of propylene/1-hexene/ethylene copolymers have been calculated according to the following table:

| Area | Chemical Shift | Assignments | Sequence |
|---|---|---|---|
| 1 | 46.93 - 46.00 | $S_{\alpha\alpha}$ | PP |

(continued)

| Area | Chemical Shift | Assignments | Sequence |
|---|---|---|---|
| 2 | 44.50 - 43.82 | $S_{\alpha\alpha}$ | PH |
| 3 | 41.34 -4.23 | $S_{\alpha\alpha}$ | HH |
| 4 | 38.00 - 37.40 | $S_{\alpha\gamma}$+ $S_{\alpha\delta}$ | PE |
| 5 | 35.70 -35.0 | $4B_4$ | H |
| 6 | 35.00 - 34.53 | $S_{\alpha\gamma}$+ $S_{\alpha\delta}$ | HE |
| 7 | 33.75 33.20 | CH | H |
| 8 | 33.24 | $T_{\delta\delta}$ | EPE |
| 9 | 30.92 | $T_{\beta\delta}$ | PPE |
| 10 | 30.76 | $S_{\gamma\gamma}$ | XEEX |
| 11 | 30.35 | $S_{\gamma\delta}$ | XEEE |
| 12 | 29.95 | $S_{\delta\delta}$ | EEE |
| 13 | 29.35 | $3B_4$ | H |
| 14 | 28.94 - 28.38 | CH | P |
| 15 | 27.43 - 27.27 | $S_{\beta\delta}$ | XEE |
| 16 | 24.67 -24.53 | $S_{\beta\beta}$ | XEX |
| 17 | 23.44 -23.35 | $2B_4$ | H |
| 18 | 21.80 - 19.90 | $CH_3$ | P |
| 19 | 14.22 | $CH_3$ | H |

The 1-hexene content of component a) has been calculated from the 1-hexene total content of the composition by using the formula $C6_{tot}$=$C6_a$x$W_a$, Wheerin C6 is the 1-hexene content and Wa is the amount of component a.

**Seal Initiation Temperature (SIT)**

**Preparation of the film specimens**

Some films with a thickness of 50 μm are prepared by extruding each test composition in a a single screw Collin extruder (length/diameter ratio of screw 1:25) at a film drawing speed of 7 m/min and a melt temperature do 210-250 °C. Each resulting film is superimposed on a 1000 μm thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a Karo 4 Brueckener film stretcher at 160°C, thus obtaining a 20 μm thick film (18 μm homopolymer+2 μm test).

Determination of the SIT.

Film Strips, 6 cm wide and 35 cm length are cut from the center of the BOPP film he film was superimposed with a BOPP film made of PP homopolymer. The superimposed specimens are sealed along one of the 2 cm sides with a Brugger Feinmechanik Sealer, model HSG-ETK 745. Sealing time is 5 seconds at a pressure of 0.14 MPa (20 psi). The starting sealing temperature is from about 10 °C less than the melting temperature of the test composition. The sealed strip is cut in 6 specimens 15 mm wide long enough to be claimed in the tensile tester grips. The seal strength is tested and load cell capacity 100 N, cross speed 100 mm/min and grip distance 50 mm. The results is expressed as the average of macimum seal strength (N). from are left to cool and then their unsealed ends are attached to an Instron machine where they are tested at a traction speed of 50 mm/min.
The test is than repeated by changing the temperature as follows:
If seal strength <1.5 N then increase the temperature

If seal strength >1.5 N then decrease the temperature

Temperature variation must be adjusted stepwise, if seal strength is close to target select steps of 1°C if the strength is far from target select steps of 2°C.

The target seal strength (SIT) is defined as the lowest temperature at which a seal strength higher or equal to 1.5 N is achieved

**Determination of the Haze**

50 μm film speciments prepared as described above for the SIT measure have been used. The haze value is measured using a Gardner photometric unit connected to a Hazemeter type UX-10 or an equivalent instrument having G.E. 1209 light source with filter "C". Reference samples of known haze are used for calibrating the instrument.

**Preparation of the copolymer**

Catalyst system

In a 500 ml cylindric glass reactor equipped with a filtering barrier are introduced at 0°C 225 ml of $TiCl_4$, and, while under agitation in a period of 15 minutes, 10.1 g (54 mmoles) of microspheroidal $MgCl_2$.2.1 $C_2H_5OH$ obtained as described below.

At the end of the addition, the temperature is brought to 70°C, and 9 mmoles of 9,9-bis(methoxymethyl)fluorene are introduced. The temperature is increased to 100°C and, after 2 hours, the $TiCl_4$ is removed by filtration. 200 ml of $TiCl_4$ and 9 mmoles of 9,9-bis(methoxymethyl)fluorene are added; after 1 hour at 110°C the content is filtered again and another 200 ml of $TiCl_4$ are added, continuing the treatment at 110°C for one more hour; finally, the content is filtered and washed at 60°C with n-heptane until all chlorine ions disappear from the filtrate.

The microspheroidal $MgCl_2$.2.1 $C_2H_5OH$ is prepared as follows.

48 g of anhydrous $MgCl_2$, 77 g of anhydrous $C_2H_5OH$, and 830 ml of kerosene are fed, in inert gas and at ambient temperature, in a 2 liter autoclave equipped with a turbine agitator and drawing pipe. The content is heated to 120°C while stirring thus forming the adduct between $MgCl_2$ and the alcohol that melts and remains mixed with the dispersing agent. The nitrogen pressure inside the autoclave is maintained at 15 atm. The drawing pipe of the autoclave is heated externally to 120°C with a heating jacket, has an inside diameter of 1 mm, and is 3 meters long from one end of the heating jacket to the other. Then the mixture is caused to flow through the pipe at a velocity of 7m/sec ca.

At the exit of the pipe the dispersion is gathered in a 5 l flask, under agitation, containing 2.5 l of kerosene, and being externally cooled by way of a jacket maintained at an initial temperature of - 40°C. The final temperature of the dispersion is 0°C. The spherical solid product that constituted the dispersed phase of the emulsion is separated by way of settling and filtration, and then washed with heptane and dried. All these operations are carried out in an inert gas atmosphere.

130 g of $MgCl_2$ 3 $C_2H_5OH$ in the form of spherical solid particles with a maximum diameter less than or equal to 50 micron, are obtained.

The alcohol is removed from the product thus obtained at temperatures that gradually increase from 50°C to 100°C in nitrogen current until the alcohol content is reduced to 2.1 moles per mole of $MgCl_2$.

**Catalyst system and prepolymerization treatment**

Before introducing it into the polymerization reactor, the solid catalyst component described above is contacted at 15 °C for about 6 minutes with aluminum triethyl (TEAL) and dicyclopentyl dimethoxy silane (DCPMS) as external donor.

The catalyst system is then subjected to prepolymerization by maintaining it in suspension in liquid propylene at 20 °C for about 20 minutes before introducing it into the polymerization reactor.

Polymerization

Into a first gas phase polymerization reactor a propylene ethylene copolymer (component (a)) is produced by feeding in a continuous and constant flow the prepolymerized catalyst system, hydrogen (used as molecular weight regulator), propylene and ethylene in the gas state.

The polypropylene copolymer produced in the first reactor is discharged in a continuous flow and, after having been purged of unreacted monomers, is introduced, in a continuous flow, into a second gas phase polymerization reactor, together with quantitatively constant flows of hydrogen, 1-hexene and propylene in the gas state.

The polymerization conditions are reported in table 1

Table 1

| | | comp ex1 | comp ex2 | comp ex3 | Ex4 |
|---|---|---|---|---|---|
| catalyst feed | g/h | 9.8 | 9.5 | 11.2 | 9.2 |
| TEAL/solid catalyst component weight ratio | g/g | 4 | 4.3 | 3.5 | 4.2 |
| TEAL/D donor weight ratio | g/g | 9.5 | 14.1 | 9.1 | 28 |
| **First gas phase reactor** | | | | | |
| Polymerisation temperature | °C | 70 | 70 | 70 | 70 |
| Pressure | barg | 16 | 16 | 16 | 16 |
| H2/C3 | mol/mol | 0.003 | 0.003 | 0.004 | 0.004 |
| C2/C2+C3 | mol/mol | 0.037 | 0.038 | 0.039 | 0.045 |
| split first reactor (amount a) | wt% | 35 | 34 | 42 | 46 |
| **Second gas phase reactor** | | | | | |
| Polymerisation temperature | °C | 86 | 86 | 86 | 86 |
| Pressure | barg | 16 | 16 | 16 | 15 |
| H2/C3 | mol/mol | 0.008 | 0.007 | 0.007 | 0.004 |
| C6/C6+C3 | mol/mol | 0.11 | 0.12 | 0.12 | 0.15 |
| split second reactor (amount B) | wt% | 65 | 66 | 58 | 54 |
| *C3 = propylene; C6 = 1 -hexene H2 = hydrogen* | | | | | |

The polymer obtained according to table 1 have beend additivated with 0.05% Irg.1010; 0.1% Irg.168 and 0.05% CaSt then pellettized. The features of the compositions are reported in table 2

Table 2

| | | comp Ex 1 | comp Ex2 | Comp Ex 3 | Ex 4 |
|---|---|---|---|---|---|
| **component a)** | | | | | |
| MFR | g/10' | 6.2 | 6.7 | 5.4 | 5.4 |
| C2-% content | % | 4.8 | 4.7 | 5.4 | 5.0 |
| **component b)** | | | | | |
| MFR* | gr/10' | 5.7 | 5.5 | 5.5 | 4.2 |
| split | | 65 | 66 | 58 | 54 |
| C6** | | 7.8 | 8.5 | 8.3 | 10.9 |
| **composition** | | | | | |
| MFR tot | g/10' | 5.9 | 5.9 | 6.0 | 4.7 |
| C2-% tot | % | 1.7 | 1.6 | 2.3 | 2.3 |
| C6-% content tot | % | 5.1 | 5.6 | 4.8 | 5.9 |
| Xylene Soluble 0°/25° | % | 7.5 | 8.2 | 7.9 | 14.2 |
| Xylene Soluble 25 /25° | % | 14.6 | 15.3 | 14.1 | 23.8 |
| Tm | °C | 131.8 | 130.3 | 132.5 | 130.3 |
| Tc | °C | 86.5 | 85.6 | 86.5 | 81.9 |
| SIT on BOPP film (RDM) | °C | 94 | 94 | 92 | 75 |
| Haze (Cast Film) | % | 0.25 | 0.22 | 0.27 | 0.35 |

(continued)

| composition | | | | | |
|---|---|---|---|---|---|
| Tm-sit | °C | 37.8 | 36.3 | 40.5 | 55.3 |
| * calculated by using the formula logMFRtot=logMFRa+logMFRb<br>** calculated by using the formula C6tot=Xb*C6b wherein Xb is the split (Xa+Xb=1) | | | | | |

From table 2 results that the higher Tm-SIT difference is obtained with the composition according to the invention even if the melting point of all the composition are substantially the same.

## Claims

**1.** A propylene polymer composition comprising:

a) from 35 wt% to 65 wt% of a propylene 1-hexene copolymer containing from 10.2 to 13.0% by weight, of 1-hexene derived units having a Melt Flow Rate (MFR, measured according to ASTM D 1238, 230°C/2.16 kg, i.e. at 230°C, with a load of 2.16 kg) from 3.5 to 12.0 g/10 min;
b) from 35 wt% to 65 wt% of a propylene ethylene copolymer containing from 1.5 wt% to 6.5 wt% of ethylene derived units, a having a Melt Flow Rate (MFR, measured according to ASTM D 1238, 230°C/2.16 kg, i.e. at 230°C, with a load of 2.16 kg) from 3.5 to 12.0 g/10 min;
the sum of the amount of a) and b) being 100.

**2.** The propylene polymer composition according to claim 1 wherein component a) ranges from 40 wt% to 60 wt%; and component b) ranges from 40 wt% to 60 wt%.

**3.** The propylene polymer composition according to claim 2 wherein component a) ranges from 45 wt% to 55 wt% and component b) ranges from 45 wt% to 55 wt%.

**4.** The propylene polymer composition according to anyone of claims 1- 3 wherein component a) contains from 10.5 to 13.0% by weight of 1-hexcene derived units.

**5.** The propylene polymer composition according to anyone of claims 1-4 wherein component b) contains from 2.0 wt% to 6.1 wt%; of ethylene derived units.

**6.** The propylene polymer composition according to anyone of claims 1-5 wherein in component a) the Melt Flow Rate (MFR, measured according to ASTM D 1238, 230°C/2.16 kg, i.e. at 230°C, with a load of 2.16 kg) ranges from 3.8 to 7.5 g/10 min.

**7.** The propylene polymer composition according to anyone of claims 1-6 wherein in component b) the Melt Flow Rate (MFR, measured according to ASTM D 1238, 230°C/2.16 kg, i.e. at 230°C, with a load of 2.16 kg) ranges from 3.8 to 7.5 g/10 min

**8.** A film comprising the propylene polymer composition according to anyone of claims 1-7.

**9.** The film of claim 8 being a cast film

**10.** The film of claim 8 being a BOPP film.

## Patentansprüche

**1.** Propylenpolymerzusammensetzung, umfassend:

a) 35 Gew.% bis 65 Gew.% von einem Propylen-1-Hexen-Copolymer, das 10,2 bis 13,0 Gew.% von 1-Hexen abgeleitete Einheiten enthält, mit einer Schmelzflussrate (MFR, gemessen gemäß ASTM D 1238, 230 °C/2,16

kg, d. h. bei 230 °C unter einer Last von 2,16 kg) von 3,5 bis 12,0 g/10 min;
b) 35 Gew.% bis 65 Gew.% von einem Propylen-Ethylen-Copolymer, das 1,5 bis 6,5 Gew.% von Ethylen abgeleitete Einheiten enthält, mit einer Schmelzflussrate (MFR, gemessen gemäß ASTM D 1238, 230 °C/2,16 kg, d. h. bei 230 °C, unter einer Last von 2,16 kg) von 3,5 bis 12,0 g/10 min;
wobei die Summe der Menge von a) und b) 100 beträgt.

**2.** Propylenpolymerzusammensetzung nach Anspruch 1, wobei Komponente a) im Bereich von 40 Gew.% bis 60 Gew.% liegt und Komponente b) im Bereich von 40 Gew.% bis 60 Gew.% liegt.

**3.** Propylenpolymerzusammensetzung nach Anspruch 2, wobei Komponente a) im Bereich von 45 Gew.% bis 55 Gew.% liegt und Komponente b) im Bereich von 45 Gew.% bis 55 Gew.% liegt.

**4.** Propylenpolymerzusammensetzung nach einem der Ansprüche 1 bis 3, wobei Komponente a) 10,5 bis 13,0 Gew.% von 1-Hexen abgeleitete Einheiten aufweist.

**5.** Propylenpolymerzusammensetzung nach einem der Ansprüche 1 bis 4, wobei Komponente b) 2,0 Gew.% bis 6,1 Gew.% von Ethylen abgeleitete Einheiten enthält.

**6.** Propylenpolymerzusammensetzung nach einem der Ansprüche 1 bis 5, wobei in Komponente a) die Schmelzflussrate (MFR, gemessen gemäß ASTM D 1238, 230 °C/2,16 kg, d. h. bei 230 °C unter einer Last von 2,16 kg) im Bereich von 3,8 bis 7,5 g/10 min liegt.

**7.** Propylenpolymerzusammensetzung nach einem der Ansprüche 1 bis 6, wobei in Komponente b) die Schmelzflussrate (MFR, gemessen gemäß ASTMD 1238, 230 °C/2,16 kg, d. h. bei 230 °C unter einer Last von 2,16 kg) im Bereich von 3,8 bis 7,5 g/10 min liegt.

**8.** Folie, die die Propylenpolymerzusammensetzung nach einem der Ansprüche 1 bis 7 umfasst.

**9.** Folie nach Anspruch 8, die eine Gießfolie ist.

**10.** Folie nach Anspruch 8, die eine BOPP-Folie ist.

**Revendications**

**1.** Composition de polymère de propylène comprenant :

a) 35% en poids à 65% en poids d'un copolymère de propylène et de 1-hexène contenant 10,2 à 13,0% en poids de motifs dérivés de 1-hexène présentant un indice de fluidité à chaud (MFR, mesuré selon la norme ASTM D 1238, 230°C/2,16 kg, c'est-à-dire à 230°C sous une charge de 2,16 kg) de 3,5 à 12,0 g/10 min ;
b) 35% en poids à 65% en poids d'un copolymère de propylène et d'éthylène contenant 1,5% en poids à 6,5% en poids de motifs dérivés d'éthylène présentant un indice de fluidité à chaud (MFR, mesuré selon la norme ASTM D 1238, 230°C/2,16 kg, c'est-à-dire à 230°C sous une charge de 2,16 kg) de 3,5 à 12,0 g/10 min ;
la somme des quantités de a) et de b) valant 100.

**2.** Composition de polymère de propylène selon la revendication 1, la quantité de constituant a) étant située dans la plage de 40% en poids à 60% en poids ; et la quantité de constituant b) étant située dans la plage de 40% en poids à 60% en poids.

**3.** Composition de polymère de propylène selon la revendication 2, la quantité de constituant a) étant située dans la plage de 45% en poids à 55% en poids et la quantité de constituant b) étant située dans la plage de 45% en poids à 55% en poids.

**4.** Composition de polymère de propylène selon l'une quelconque des revendications 1 à 3, le constituant a) contenant 10,5 à 13,0% en poids de motifs dérivés de 1-hexène.

**5.** Composition de polymère de propylène selon l'une quelconque des revendications 1 à 4, le constituant b) contenant 2,0% en poids à 6,1% en poids de motifs dérivés d'éthylène.

6. Composition de polymère de propylène selon l'une quelconque des revendications 1 à 5, l'indice de fluidité à chaud (MFR, mesuré selon la norme ASTM D 1238, 230°C/2,16 kg, c'est-à-dire à 230°C sous une charge de 2,16 kg) du constituant a) étant situé dans une plage de 3,8 à 7,5 g/10 min.

7. Composition de polymère de propylène selon l'une quelconque des revendications 1 à 6, l'indice de fluidité à chaud (MFR, mesuré selon la norme ASTM D 1238, 230°C/2,16 kg, c'est-à-dire à 230°C sous une charge de 2,16 kg) du constituant b) étant situé dans une plage de 3,8 et 7,5 g/10 min

8. Film comprenant la composition de polymère de propylène selon l'une quelconque des revendications 1 à 7.

9. Film selon la revendication 8, qui est un film coulé

10. Film selon la revendication 8, qui est un film BOPP (polypropylène bi-orienté).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006002778 A
- WO 2009077287 A
- WO 2015062787 A
- US 20030220452 A
- US 4399054 A
- EP 45977 A
- EP 361493 A
- EP 728769 A


### Non-patent literature cited in the description


- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536